# EUROPÄISCHE PATENTANMELDUNG

(11) **EP 3 285 037 A1**
(43) Veröffentlichungstag der Anmeldung: **21.02.2018**
(21) Anmeldenummer: 17186356.6
(22) Anmeldetag: 16.08.2017
(51) Int. Cl.: F28D 20/02, F28F 3/12, F28D 1/03, F24F 5/00, F25D 3/04

(54) **EISSPEICHER**

(30) Priorität: 18.08.2016 DE 102016115344
(71) Anmelder: Viessmann Werke GmbH & Co. KG, 35108 Allendorf (DE)
(72) Erfinder: Vaupel, Manfred, 35066 Frankenberg (DE); Bühring, Andreas, 79100 Freiburg (DE); Brockmann, Robert, 60316 Frankfurt (DE); Wrede, Christopher, 59964 Medebach (DE)
(74) Vertreter: Wolf, Michael

(57) **Zusammenfassung**

Die Erfindung betrifft einen Eisspeicher, umfassend einen Behälter (1), in dem ein Entzugswärmetauscher (2) angeordnet ist, der aus zwei, mit ihrer Hauptebene vertikal im Behälter (1) ausgerichteten Platten mit unteren, oberen und seitlichen Rändern gebildet ist, wobei die Platten in ersten Bereichen (2.1) fest miteinander verbunden und in zweiten Bereichen (2.2) einen Strömungskanal für ein Wärmeträgermedium zwischen sich aufnehmend ausgebildet sind. Nach der Erfindung ist vorgesehen, dass eine Menge an ersten Bereichen (2.1) vom mittleren, unteren Rand zum seitlichen und oberen Rand des Entzugswärmetauschers (2) zunehmend und eine Menge an zweiten Bereichen (2.2) vom mittleren, unteren Rand zum seitlichen und oberen Rand des Entzugswärmetauschers (2) abnehmend ausgebildet ist.

## Beschreibung

Die Erfindung betrifft einen Eisspeicher gemäß dem Oberbegriff des Patentanspruchs 1.

Ein Eisspeicher der eingangs genannten Art ist aus dem Patentdokument EP 2 848 885 A1 bekannt. Dieser Eisspeicher besteht aus einem Behälter, in dem ein Entzugswärmetauscher angeordnet ist, der aus zwei, mit ihrer Hauptebene vertikal im Behälter ausgerichteten Platten mit unteren, oberen und seitlichen Rändern gebildet ist, wobei die Platten in ersten Bereichen fest miteinander verbunden und in zweiten Bereichen einen Strömungskanal für ein Wärmeträgermedium zwischen sich aufnehmend ausgebildet sind. Dabei ist die obige Maßgabe, gemäß der in dem Behälter "ein" Entzugswärmetauscher angeordnet ist, sowohl in Bezug auf den genannten Stand der Technik als auch in Bezug auf die noch zu erläuternde Erfindung im Sinne von "mindestens ein" Entzugswärmetauscher zu verstehen. Weiterhin ist nicht nur beim genannten Stand der Technik, sondern auch bei der noch zu erläuternden Erfindung vorgesehen, den Entzugswärmetauscher im sogenannten Rollbondverfahren (siehe hierzu https://de.wikipedia.org/w/index.php?title=Roll-bonding&oldid= 150244299) herzustellen.

In Absatz [0040] der genannten Schrift (vergleiche hierzu außerdem auch Absatz [0026]) ist in Bezug auf die dortige Figur 7 ausgeführt, dass der dort gezeigte Verlauf der Rohrschlange es ermögliche, Eis von der Mitte und von unten her nach außen und oben wachsen zu lassen. Nach diesseitigem Verständnis dürfte diese vorteilhafte Eisbildungsrichtung mit der in Figur 7 dargestellten Rohrschlange allerdings nicht realisierbar sein.

Der Erfindung liegt dementsprechend die Aufgabe zugrunde, einen Eisspeicher der eingangs genannten Art zu verbessern. Insbesondere soll ein Eisspeicher geschaffen werden, der stets von unten innen nach oben außen zufriert, so dass Wasserkavernen vermieden werden und eine möglichst gleichbleibende Entzugsleistung realisierbar ist.

Diese Aufgabe ist mit einem Eisspeicher der eingangs genannten Art durch die im Kennzeichen des Patentanspruchs 1 aufgeführten Merkmale gelöst.

Nach der Erfindung ist also vorgesehen, dass eine Menge an ersten Bereichen vom mittleren, unteren Rand zum seitlichen und oberen Rand des Entzugswärmetauschers zunehmend und eine Menge an zweiten Bereichen vom mittleren, unteren Rand zum seitlichen und oberen Rand des Entzugswärmetauschers abnehmend ausgebildet ist.

Mit anderen Worten ist erfindungsgemäß dafür gesorgt, dass der Entzugswärmetauscher pro Zeitintervall am mittleren, unteren Rand von einer größeren Wärmeträgermenge als am seitlichen, oberen Rand durchströmbar ausgebildet ist. Diese Maßgabe sorgt für eine gerichtete Eisbildung und dabei trotz Eisbildung für eine gleichmäßig hohe Entzugsleistung.

Andere vorteilhafte Weiterbildungen ergeben sich aus den abhängigen Patentansprüchen.

Der Vollständigkeit halber wird noch auf die weiter abliegenden Dokument DE 10 2007 048 416 A1, US 6 247 522 B1, DE 10 2011 014 075 A1 und WO 1990/01659 A1 hingewiesen.

Der erfindungsgemäße Eisspeicher einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: perspektivisch den Behälter des Eisspeichers in Außenansicht,
- Figur 2: perspektivisch den Behälter gemäß Figur 1, halb geöffnet mit eingesetzten Entzugswärmetauschern in Außenansicht und mit partieller Durchsicht ins Innere an der Frontseite des Behälters und
- Figur 3: in Vorderansicht einen der Entzugswärmetauscher gemäß Figur 2.

Der in den Figuren dargestellte Eisspeicher besteht aus einem Behälter 1, in dem ein (bzw. mehrere) Entzugswärmetauscher 2 angeordnet ist (bzw. sind), der aus zwei, mit ihrer Hauptebene vertikal im Behälter 1 ausgerichteten Platten mit unteren, oberen und seitlichen Rändern gebildet ist, wobei die Platten in ersten Bereichen 2.1 fest miteinander verbunden und in zweiten Bereichen 2.2 einen Strömungskanal für ein Wärmeträgermedium zwischen sich aufnehmend ausgebildet sind.

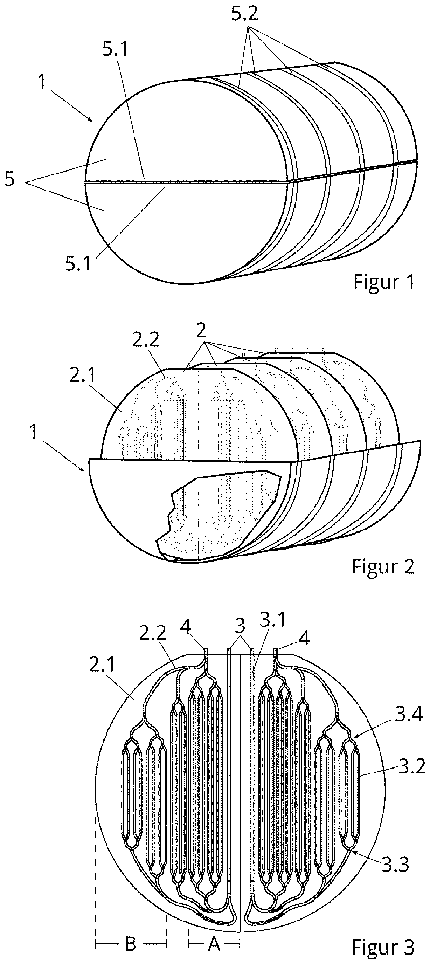

Wesentlich für den erfindungsgemäßen Eisspeicher ist nun, dass eine Menge an ersten Bereichen 2.1 vom mittleren, unteren Rand zum seitlichen und oberen Rand des Entzugswärmetauschers 2 zunehmend und eine Menge an zweiten Bereichen 2.2 vom mittleren, unteren Rand zum seitlichen und oberen Rand des Entzugswärmetauschers 2 abnehmend ausgebildet ist, siehe Figur 3.

Nochmals in anderen Worten ausgedrückt, entsprechen somit die ersten Bereiche 2.1 jenen Bereichen, an denen die Platten des Entzugswärmetauschers 2 fest miteinander verbunden sind, und die zweiten Bereiche 2.2 jenen Bereichen, an denen die Platten einen Strömungskanal zwischen sich aufnehmend ausgebildet sind. Mit Verweis auf die entsprechenden Markierungen in Figur 3 ergibt sich somit, dass die zweiten Bereiche 2.2 die Strömungskanäle für das Wärmeträgermedium in den Platten und die ersten Bereiche 2.1 ganz allgemein jene Bereiche sind, an denen solche Strömungskanäle nicht vorhanden sind.

Mit Verweis auf Figur 3 ist dabei weiterhin Folgendes vorgesehen:
- Unten in der Mitte der dargestellten Platte sind recht dicke und recht eng beieinander liegende Strömungskanäle für das Wärmeträgermedium angeordnet, d. h. hier gibt es flächenmäßig eine große Menge an zweiten Bereichen 2.2.
- Diese Strömungskanäle werden im vertikal gesehen mittleren Teil der Platte als senkrechte, parallele Kanäle weitergeführt. Hierbei ist der Abstand der Strömungskanäle horizontal gesehen von der Mitte der Platte aus zu den Randbereichen hin zunehmend, d. h. die Menge der ersten Bereiche 2.1 nimmt zum Rand der Platte hin zu und die Menge der zweiten Bereiche 2.2 nimmt in diese Richtung hin ab.
- An die parallelen Strömungskanäle schließen sich im oberen Teil der Platte Sammelkanäle an, die recht weit auseinander liegend angeordnet sind, d. h. dort ist die Menge an zweiten Bereichen 2.2 recht gering und jene an ersten Bereichen 2.1 recht hoch.

Insgesamt ergibt sich hieraus, dass es an den Platten einen - wenn auch nicht kontinuierlichen - Gradienten in der Flächendichte der ersten und zweiten Bereiche 2.1, 2.2 gibt.

Dabei ist bezüglich der Konstruktion des erfindungsgemäßen Eisspeichers weiterhin bevorzugt vorgesehen, dass der Behälter 1 aus zwei Wannenteilen 5 besteht, die an ihren Wannenrändern 5.1 miteinander verbunden ausgebildet sind, wie in Figur 1 dargestellt ist. Des Weiteren weist vorzugsweise der Behälter 1 eine Wandung mit vertikal verlaufenden Rippen 5.2 auf und ist der Entzugswärmetauscher 2 im Behälter 1 durch die Rippen 5.2 fixiert ausgebildet (siehe Figur 2). Hierdurch wird die Befestigung des Entzugswärmetauschers 2 im Behälter 1 direkt durch ein konstruktives Merkmal dieses Behälters 1 ermöglicht, ohne dass aufwendige Befestigungsmittel verwendet werden müssen. Zudem ist bevorzugterweise vorgesehen, dass der Entzugswärmetauscher 2 im Rollbondverfahren hergestellt ausgebildet ist und er vorzugsweise angenähert als runde Scheibe ausgebildet ist. Dabei ist der Entzugswärmetauscher 2 bevorzugterweise orientiert an einer senkrechten Mittellinie symmetrisch ausgebildet.

Weiterhin ist bevorzugt, dass am mittleren, oberen Rand des Entzugswärmetauschers 2 mindestens ein Wärmeträgermedium-Zufuhranschluss 3 und mindestens ein Wärmeträgermedium-Abfuhranschluss 4 vorgesehen ist (siehe Figur 3), wobei der Entzugswärmetauscher 2 wiederum vorzugsweise auf seiner linken und seiner rechten Hälfte jeweils einen Wärmeträgermedium-Zufuhranschluss 3 und einen Wärmeträgermedium-Abfuhranschluss 4 aufweist.

Zusätzlich ist bevorzugt, dass vom Wärmeträgermedium-Zufuhranschluss 3 mindestens ein erster Strömungskanalabschnitt 3.1 zum mittleren, unteren Rand geführt ausgebildet ist. Ebenso ist bevorzugt, dass der erste Strömungskanalabschnitt 3.1 am unteren Rand mehrere Verzweigungen 3.3 aufweist und sich an diese mehrere in Richtung des oberen Rands verlaufende, zweite Strömungskanalabschnitte 3.2 anschließend ausgebildet sind. Bevorzugterweise ist dann der erste Strömungskanalabschnitt 3.1 auf mindestens zehn, vorzugsweise mindestens zwanzig, zweite Strömungskanalabschnitte 3.2 aufgeteilt ausgebildet. Dabei sind vorzugsweise die ersten und/oder die zweiten Strömungskanalabschnitte 3.1, 3.2 als gerade, vertikal und zueinander parallel verlaufende Rohrleitungsabschnitte ausgebildet.

Des Weiteren sind bevorzugterweise am oberen Rand mehrere, mit dem Wärmeträgermedium-Abfuhranschluss 4 verbundene Zusammenführungen 3.4 für die zweiten Strömungskanalabschnitte 3.2 vorgesehen. Dabei ist insgesamt gesehen bevorzugt, dass mehrere Verzweigungen 3.3 und/oder Zusammenführungen 3.4 hintereinander geschaltet angeordnet sind. Hierbei sind vorzugsweise die Verzweigungen 3.3 als von einem Strömungskanalabschnitt 3.1, 3.2 auf zwei Strömungskanalabschnitte 3.1, 3.2 und/oder die Zusammenführungen 3.4 als von zwei Strömungskanalabschnitten 3.1, 3.2 auf einen Strömungskanalabschnitt 3.1, 3.2 übergehend ausgebildet. Auf diese Weise lässt sich eine breite Auffächerung der Strömungskanäle erreichen.

Die oben genannten Merkmale beschreiben die grundlegenden bevorzugten Merkmale des erfindungsgemäßen Eisspeichers. Diese werden nun bevorzugt um die folgenden, darauf aufbauenden Merkmale ergänzt, die eine besonders effiziente Funktion eben dieses Eisspeichers ermöglichen:
Zum einen ist vorzugsweise der Entzugswärmetauscher 2 pro Zeitintervall am mittleren, unteren Rand von einer größeren Wärmeträgermenge als am seitlichen, oberen Rand durchströmbar ausgebildet. Des Weiteren sind bevorzugterweise Abstände zwischen zweiten Strömungskanalabschnitten 3.2 am seitlichen Rand (siehe Bereich B in Figur 3) größer als im mittleren Bereich (siehe Bereich A in Figur 3) des Entzugswärmetauschers 2 ausgebildet. Zudem ist bevorzugt, dass die zweiten Strömungskanalabschnitte 3.2 am seitlichen Rand kürzer als im mittleren Bereich des Entzugswärmetauschers 2 ausgebildet sind.

Weiterhin weisen vorzugsweise die Verzweigungen 3.3, die in Strömungsrichtung des Wärmeträgermediums direkt auf den ersten Strömungskanalabschnitt 3.1 folgend ausgebildet sind, einen größeren Querschnitt auf als die Verzweigungen 3.3, die in Strömungsrichtung des Wärmeträgermediums direkt den zweiten Strömungskanalabschnitten 3.2 vorangehend ausgebildet sind. Ebenso weisen vorzugsweise die Zusammenführungen 3.4, die in Strömungsrichtung des Wärmeträgermediums direkt dem Wärmeträgermedium-Abfuhranschluss 4 vorangehend ausgebildet sind, einen größeren Querschnitt auf als die Zusammenführungen 3.4, die in Strömungsrichtung des Wärmeträgermediums direkt auf die zweiten Strömungskanalabschnitte 3.2 folgend ausgebildet sind.

Letztlich ist noch bevorzugt, dass im mittleren (siehe A in Figur 3), oberen Bereich des Entzugswärmetauschers 2 ein größerer Teil der zweiten Strömungskanalabschnitte 3.2 angeordnet ist als im mittleren, unteren Bereich und/oder dass im seitlichen (siehe B in Figur 3), unteren Bereich des Entzugswärmetauschers 2 ein größerer Teil der zweiten Strömungskanalabschnitte 3.2 angeordnet ist als im seitlichen, oberen Bereich.

Außerdem ist vorgesehen, dass ein Durchmesser der zweiten Strömungskanalabschnitte 3.2 am seitlichen Rand kleiner als im mittleren Bereich des Entzugswärmetauschers 2 ausgebildet ist.

Diese Merkmale bewirken einzeln oder in Kombination eine Erhöhung der Dichte der ersten Bereiche 2.1 im mittleren, unteren Bereich des Entzugswärmetauschers 2 im Vergleich zum seitlichen, oberen Bereich des Entzugswärmetauschers 2, bei gleichzeitiger Bewahrung klar definierter Strömungswege. Der Vorteil dieser Konstruktion lässt sich noch einmal durch folgende Funktionsbeschreibung eines Ausführungsbeispiels des Erfindungsgemäßen Eisspeichers verdeutlichen:
Beim Betrieb des Eisspeichers wird dem Entzugswärmetauscher 2 ein Wärmeträgermedium über einen Wärmeträgermedium-Zufuhranschluss 3 zugeführt. Das Wärmeträgermedium gelangt nun über einen ersten Strömungskanalabschnitt 3.1 zum mittleren, unteren Rand des Entzugswärmetauschers 2 und über Verzweigungen 3.3 in die zweiten Strömungskanalabschnitte 3.2. Während dieses Vorgangs wird dem Wärmeträgermedium kontinuierlich (Wärme-)Energie zugeführt, bis es schließlich, merklich aufgewärmt, von den zweiten Strömungskanalabschnitten 3.2 über Zusammenführungen 3.4 in einen Wärmeträgermedium-Abfuhranschluss 4 und damit wieder aus dem Entzugswärmetauscher 2 abgeführt wird.

Beim Entzug von Energie durch den Entzugswärmetauscher 2 soll das Wasser, welches den Entzugswärmetauscher 2 umgibt, gefrieren. Ein ungleichmäßiges Zufrieren des Wassers rund um den Entzugswärmetauscher 2 kann dabei zur Senkung der Effizienz und im schlimmsten Fall sogar zur Zerstörung des Entzugswärmetauschers 2 führen. Der Aufbau des erfindungsgemäßen Eisspeichers bewirkt dabei ein regelmäßiges, im Idealfall kegelförmiges Zufrieren des Entzugswärmetauschers 2 vom mittigen, unteren Bereich zum seitlichen, oberen Bereich hin, was dazu führt, dass diese Probleme vermieden werden können.

### Bezugszeichenliste

- 1: Behälter
- 2: Entzugswärmetauscher
- 2.1: erster Bereich
- 2.2: zweiter Bereich
- 3: Wärmeträgermedium-Zufuhranschluss
- 3.1: erster Strömungskanalabschnitt
- 3.2: zweiter Strömungskanalabschnitt
- 3.3: Verzweigung
- 3.4: Zusammenführung
- 4: Wärmeträgermedium-Abfuhranschluss
- 5: Wannenteil
- 5.1: Wannenrand
- 5.2: Rippe

## Patentansprüche

1. Eisspeicher, umfassend einen Behälter (1), in dem ein Entzugswärmetauscher (2) angeordnet ist, der aus zwei, mit ihrer Hauptebene vertikal im Behälter (1) ausgerichteten Platten mit unteren, oberen und seitlichen Rändern gebildet ist, wobei die Platten in ersten Bereichen (2.1) fest miteinander verbunden und in zweiten Bereichen (2.2) einen Strömungskanal für ein Wärmeträgermedium zwischen sich aufnehmend ausgebildet sind,
**dadurch gekennzeichnet,**
**dass** eine Menge an ersten Bereichen (2.1) vom mittleren, unteren Rand zum seitlichen und oberen Rand des Entzugswärmetauschers (2) zunehmend und eine Menge an zweiten Bereichen (2.2) vom mittleren, unteren Rand zum seitlichen und oberen Rand des Entzugswärmetauschers (2) abnehmend ausgebildet ist.

2. Eisspeicher nach Anspruch 1,
**dadurch gekennzeichnet,**
**dass** der Entzugswärmetauscher (2) pro Zeitinterval am mittleren, unteren Rand von einer größeren Wärmeträgermenge als am seitlichen, oberen Rand durchströmbar ausgebildet ist.

3. Eisspeicher nach Anspruch 1 oder 2,
**dadurch gekennzeichnet,**
**dass** am mittleren, oberen Rand des Entzugswärmetauschers (2) mindestens ein Wärmeträgermedium-Zufuhranschluss (3) und mindestens ein Wärmeträgermedium-Abfuhranschluss (4) vorgesehen ist.

4. Eisspeicher nach Anspruch 3,
**dadurch gekennzeichnet,**
**dass** vom Wärmeträgermedium-Zufuhranschluss (3) mindestens ein erster Strömungskanalabschnitt (3.1) zum mittleren, unteren Rand geführt ausgebildet ist.

5. Eisspeicher nach Anspruch 4,
**dadurch gekennzeichnet,**
**dass** der erste Strömungskanalabschnitt (3.1) am unteren Rand mehrere Verzweigungen (3.3) aufweist und sich an diese mehrere in Richtung des oberen Rands verlaufende, zweite Strömungskanalabschnitte (3.2) anschließend ausgebildet sind.

6. Eisspeicher nach Anspruch 5,
**dadurch gekennzeichnet,**
**dass** am oberen Rand mehrere, mit dem Wärmeträgermedium-Abfuhranschluss (4) verbundene Zusammenführungen (3.4) für die zweiten Strömungskanalabschnitte (3.2) vorgesehen sind.

7. Eisspeicher nach Anspruch 5 und/oder 6,
**dadurch gekennzeichnet,**
**dass** mehrere Verzweigungen (3.3) und/oder Zusammenführungen (3.4) hintereinander geschaltet angeordnet sind.

8. Eisspeicher nach einem der Ansprüche 5 bis 7,
**dadurch gekennzeichnet,**
**dass** Abstände zwischen zweiten Strömungskanalabschnitten (3.2) am seitlichen Rand größer als im mittleren Bereich des Entzugswärmetauschers (2) ausgebildet sind.

9. Eisspeicher nach einem der Ansprüche 5 bis 8,
**dadurch gekennzeichnet,**
**dass** die zweiten Strömungskanalabschnitte (3.2) am seitlichen Rand kürzer als im mittleren Bereich des Entzugswärmetauschers (2) ausgebildet sind.

10. Eisspeicher nach einem der Ansprüche 1 bis 9,
**dadurch gekennzeichnet,**
**dass** ein Durchmesser der zweiten Strömungskanalabschnitte (3.2) am seitlichen Rand kleiner als im mittleren Bereich des Entzugswärmetauschers (2) ausgebildet ist.
